# DEMANDE DE BREVET EUROPEEN

(11) **EP 4 155 795 A1**
(43) Date de publication de la demande: **29.03.2023**
(21) Numéro de dépôt: 22192804.7
(22) Date de dépôt: 30.08.2022
(51) Int. Cl.: G02B 6/44

(54) **BOÎTIER DE RACCORDEMENT OPTIQUE INTELLIGENT**

(30) Priorité: 27.09.2021 FR 2110143
(71) Demandeur: Nexans, 92400 Courbevoie (FR)
(72) Inventeur: LIMA, Cyril, 08200 Sedan (FR); DEVAUX, Julien, 08160 Chalandry-Elaire (FR)
(74) Mandataire: Ipsilon

(57) **Abrégé**

Un boîtier (10) de raccordement de fibres optiques comprenant au moins un capteur d'état (12) mesurant au moins un paramètre physique du boîtier (10) et/ou détectant l'ouverture et la fermeture du boîtier (10) et un moyen (14) d'identification à distance du boîtier (10) par voie électronique.

## Description

La présente invention se rapporte à un boîtier de raccordement optique intelligent.

L'invention appartient au domaine des réseaux de télécommunications à fibres optiques.

Les réseaux de télécommunications à fibres optiques comportent notamment des câbles à fibres optiques et des boîtiers de raccordement optiques.

Les boîtiers de raccordement peuvent être installés à l'extérieur ou dans des bâtiments. Ils assurent la protection des fibres optiques, des épissures et des connexions.

Lorsqu'ils sont installés à l'extérieur, notamment en chambre de tirage ou sur poteau, les boîtiers de raccordement sont soumis aux aléas climatiques. Des infiltrations d'eau peuvent dégrader partiellement ou totalement les performances du réseau optique.

A l'intérieur de bâtiments, des infiltrations de poussières ou d'insectes peuvent également dégrader les performances du réseau optique. En outre, de telles dégradations sont imprévisibles et ne sont actuellement pas anticipées.

Par ailleurs, les boîtiers de raccordement sont installés par des techniciens d'intervention. Lorsque les réseaux sont mutualisés, différents techniciens interviennent respectivement pour le compte de différents opérateurs. A l'installation ou lors d'interventions ultérieures sur le boîtier, il est donc difficile d'identifier précisément le technicien. Lorsqu'elle est possible, cette identification n'est pas immédiate. Or la majeure partie des défaillances apparaissent lors de l'intervention d'un technicien qui doit ouvrir les boîtiers, provoquant ainsi l'entrée d'éléments extérieurs et des déconnexions intempestives des raccordements préétablis.

En outre, sur les réseaux denses, plusieurs boîtiers peuvent être installés à proximité les uns des autres. Cela rend leur identification délicate, ce qui engendre un risque de ne pas intervenir sur le bon boîtier.

En effet, théoriquement, chaque boîtier dispose d'une identification physique unique, par exemple au moyen d'une étiquette à frapper ou imprimée, d'un QR code ou d'un marquage à l'encre. Néanmoins, la durée de vie de ce moyen d'identification varie selon sa nature (encre indélébile, étiquette métallique, plastique, adhésive, etc.). Lorsque l'identification n'est plus lisible ou est absente, le technicien n'a pas la certitude d'intervenir sur le bon boîtier et peut se tromper ou perdre un temps significatif en recherches afin de s'assurer d'effectuer les bonnes connexions aux bons endroits.

Enfin, chaque intervention sur un boîtier engendre potentiellement un stress sur les fibres optiques. De plus, certaines fonctionnalités ou capacités du boîtier peuvent être altérées lors de l'intervention. Etant donné l'absence d'historique des interventions sur ces boîtiers, il est impossible de connaître l'état précis de chaque boîtier afin de pouvoir anticiper les pannes. Sur certains sites, un carnet d'enregistrement est théoriquement renseigné par le technicien à chaque intervention, mais en pratique, il est quasiment inexistant, pas toujours renseigné et n'est pas consultable à distance. Aucune maintenance préventive ne peut être partagée entre opérateurs du réseau et les tests d'état tels que des tests d'étanchéité pour les boîtiers étanches munis d'une valve doivent être réalisés in situ.

La présente invention a pour but de remédier aux lacunes précitées de l'art antérieur.

Dans ce but, la présente invention propose un boîtier de raccordement de fibres optiques, remarquable en ce qu'il comporte :
au moins un capteur d'état mesurant au moins un paramètre physique du boîtier et/ou détectant l'ouverture et la fermeture du boîtier ; et
un moyen d'identification à distance du boîtier par voie électronique.

Ainsi, la présente invention permet d'identifier le boîtier de raccordement de façon sûre et pérenne et de connaître l'état du boîtier de façon dynamique sans avoir besoin de se déplacer. Cela permet d'anticiper les pannes et d'éviter toute erreur d'identification du boîtier lors de l'intervention du technicien.

Dans un mode particulier de réalisation, le boîtier de raccordement comporte en outre un dispositif de verrouillage intelligent.

Cela permet de garantir en cas d'intervention que seul le technicien habilité ouvre et ferme le boîtier.

Dans un mode particulier de réalisation, le moyen d'identification à distance est une étiquette NFC ou RFID.

Une telle étiquette est très facile à installer sur le boîtier et permet une communication fiable et sans contact.

Dans un mode particulier de réalisation, le capteur d'état mesure le degré d'humidité du boîtier.

Cela permet de détecter toute infiltration d'eau préjudiciable au fonctionnement du réseau optique.

Dans un mode particulier de réalisation, le capteur d'état mesure la température du boîtier.

Cela permet d'anticiper d'éventuelles défaillances dues à des températures sortant des plages de fonctionnement normal du boîtier.

Dans le même but que celui indiqué plus haut, la présente invention propose également un système de contrôle de l'intégrité d'un réseau de télécommunications à fibres optiques, remarquable en ce qu'il comporte :
au moins un boîtier de raccordement tel que succinctement décrit ci-dessus;
une plateforme de supervision d'interventions dans le réseau adaptée à communiquer avec l'au moins un boîtier de raccordement.

Outre les mêmes avantages et caractéristiques particulières que ceux du boîtier mentionnés ci-dessus, le système de contrôle proposé permet d'identifier les techniciens intervenant sur le ou les boîtiers du réseau et le ou les boîtiers concernés ainsi que la nature de ces interventions. L'organisation d'une maintenance prédictive du réseau est ainsi rendue possible.

Dans un mode particulier de réalisation du système, la plateforme comporte un moyen d'enregistrement des interventions.

Cela permet de disposer d'un historique des interventions qui facilite le suivi du fonctionnement du ou des boîtiers du réseau ainsi que la maintenance prédictive de ce dernier.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :

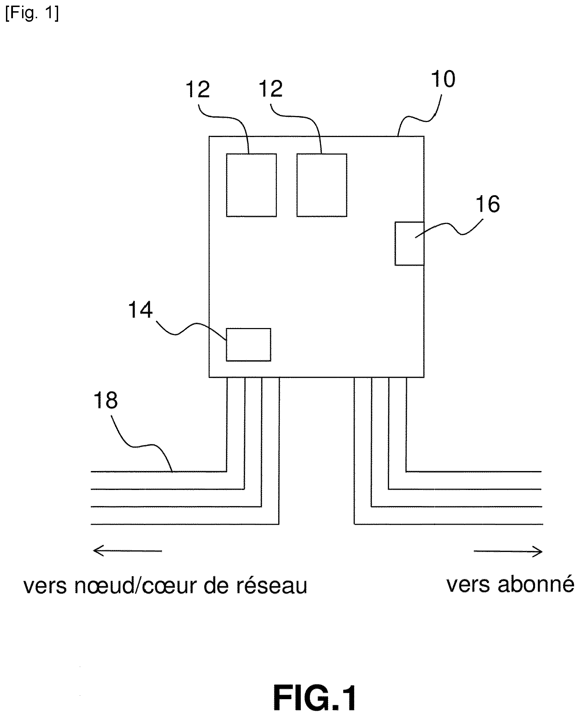

[Fig. 1] est une représentation schématique d'un boîtier conforme à la présente invention, dans un mode particulier de réalisation.

### Description de mode(s) de réalisation

Comme le montre la figure 1, dans un mode particulier de réalisation, un boîtier 10 de raccordement optique conforme à la présente invention comporte un ou plusieurs capteurs d'état 12, qui mesurent au moins un paramètre physique du boîtier 10 et/ou qui détectent l'ouverture et la fermeture du boîtier 10.

A titre d'exemple nullement limitatif, ce paramètre physique peut être le degré d'humidité du boîtier 10 ou la température du boîtier 10 ou la pression, les chocs, les vibrations, etc.

Le boîtier 10 comporte en outre un moyen 14 d'identification à distance du boîtier par voie électronique.

A titre d'exemple nullement limitatif, le moyen 14 d'identification à distance peut être une étiquette NFC (communication en champ proche, en anglais « Near Field Communication ») ou RFID (identification par radiofréquences, en anglais « Radio Frequency IDentification »). Cette étiquette est par exemple directement imprimée sur le boîtier 10, ou figure sur une étiquette autocollante apposée par exemple à l'extérieur du boîtier 10. En variante, le moyen 14 d'identification à distance peut être réalisé sous la forme d'un badge et se trouver à l'intérieur du boîtier 10.

De façon optionnelle, le boîtier 10 peut comporter en outre un dispositif 16 de verrouillage intelligent, équipé d'une circuiterie électronique lui permettant d'être commandé à distance via un terminal de télécommunications éventuellement mobile. L'ouverture et la fermeture du boîtier 10 peuvent être conditionnées à l'exécution d'une procédure d'authentification de l'utilisateur. L'état ouvert ou fermé du boîtier 10 peut être mémorisé dans un registre distant. Le dispositif 16 de verrouillage intelligent peut communiquer avec l'extérieur par exemple via la technologie NFC ou RFID, comme le moyen 14 d'identification à distance du boîtier 10.

La figure 1 montre que le boîtier 10 est relié, de façon connue en soi, à un réseau 18 de télécommunications à fibres optiques, d'une part à un nœud appartenant au cœur du réseau 18 et d'autre part, à un équipement d'abonné, c'est-à-dire à un équipement d'usager du réseau 18.

Un système de contrôle de l'intégrité du réseau 18 conforme à la présente invention comporte au moins un boîtier 10 de raccordement tel que décrit ci-dessus, ainsi qu'une plateforme de supervision d'interventions dans le réseau 18.

La plateforme de supervision est adaptée à communiquer avec le boîtier. Par exemple, si le boîtier 10 comporte un moyen 14 d'identification à distance du boîtier sous la forme d'une étiquette NFC, la plateforme de supervision comporte un moyen de lecture adapté à émettre et recevoir des signaux en direction de et en provenance de l'étiquette NFC du boîtier 10 et en provenance du ou des capteurs d'état 12.

En outre, la plateforme de supervision peut comporter un registre d'enrôlement des techniciens qui réalisent les interventions, contenant des informations d'identification de ces techniciens.

De façon optionnelle, la plateforme de supervision peut également comporter un moyen d'enregistrement des interventions, qui mémorise par exemple la date, l'heure et la durée des interventions, les données d'identification du technicien qui est intervenu et les informations d'identification du boîtier 10 concerné ainsi que la valeur des paramètres physiques mesurés par le ou les capteurs 12 en début et en fin d'intervention.

L'invention trouve à s'appliquer dans tous les types de réseaux optiques, qu'il s'agisse de réseaux FTTH (fibre jusqu'à la maison, en anglais « Fiber To The Home »), FTTE (fibre jusqu'à l'entreprise, en anglais « Fiber to the Enterprise ») ou de réseaux mobiles.

Elle peut aisément être étendue à d'autres éléments d'un réseau que les boîtiers de raccordement.

## Revendications

1. Boîtier (10) de raccordement de fibres optiques, **caractérisé en ce qu'**il comporte :
au moins un capteur d'état (12) mesurant au moins un paramètre physique dudit boîtier (10) et/ou détectant l'ouverture et la fermeture dudit boîtier(10) ; et
un moyen (14) d'identification à distance dudit boîtier (10) par voie électronique.

2. Boîtier (10) selon la revendication 1, **caractérisé en ce qu'**il comporte en outre un dispositif (16) de verrouillage intelligent.

3. Boîtier (10) selon la revendication 1 ou 2, **caractérisé en ce que** ledit moyen (14) d'identification à distance est une étiquette NFC ou RFID.

4. Boîtier (10) selon la revendication 1, 2 ou 3, **caractérisé en ce que** ledit capteur d'état (12) mesure le degré d'humidité dudit boîtier (10).

5. Boîtier (10) selon l'une quelconque des revendications précédentes, **caractérisé en ce que** ledit capteur d'état (12) mesure la température dudit boîtier (10).

6. Système de contrôle de l'intégrité d'un réseau (18) de télécommunications à fibres optiques, **caractérisé en ce qu'**il comporte :
au moins un boîtier (10) de raccordement selon l'une quelconque des revendications précédentes ;
une plateforme de supervision d'interventions dans ledit réseau (18) adaptée à communiquer avec ledit au moins un boîtier (10) de raccordement.

7. Système selon la revendication 6, **caractérisé en ce que** ladite plateforme comporte un moyen d'enregistrement desdites interventions.
